# EUROPEAN PATENT APPLICATION

(11) **EP 4 664 627 A1**
(43) Date of publication of application: **17.12.2025**
(21) Application number: 24840059.0
(22) Date of filing: 09.07.2024
(51) Int. Cl.: H01M 50/20, H01M 50/213, B65D 71/70

(54) **SECONDARY BATTERY PACKAGING PAPER AND SECONDARY BATTERY PACKAGING BOX**

(30) Priority: 13.07.2023 KR 20230091378
(71) Applicant: LG Energy Solution, Ltd., Seoul 07335 (KR)
(72) Inventor: JO, Won Gi, Daejeon 34122 (KR)
(74) Representative: Goddar, Heinz J.
(86) International application number: PCT/KR2024/009755
(87) International publication number: WO 2025/014248

(57) **Abstract**

The present invention relates to a secondary battery packaging interleaf and a secondary battery packaging box, and more specifically, relates to a secondary battery packaging interleaf and a secondary battery packaging box, capable of preventing damage to recognition codes of a plurality of accommodated cylindrical battery cells.

In order to achieve the above-described objects, according to one example of the present invention, it is possible to provide a secondary battery packaging interleaf comprising a partition wall forming multiple accommodation spaces, in which multiple cylindrical battery cells with printed recognition codes are each accommodated, and provided with a contact prevention portion to be in no contact with the recognition code printed on the outer peripheral surface of the accommodated cylindrical battery cell, and a packaging box comprising the same.

## Description

### Technical Field

The present invention relates to a secondary battery packaging interleaf and a secondary battery packaging box, and more specifically, relates to a secondary battery packaging interleaf and a secondary battery packaging box that can prevent damage to recognition codes of a plurality of cylindrical secondary batteries accommodated therein.

### Background Art

A secondary battery is a battery capable of repeated use through a discharge process converting chemical energy into electrical energy and a charge process converting electrical energy into chemical energy.

Currently widely used types of secondary batteries include lithium-ion batteries, lithium polymer batteries, nickel cadmium batteries, nickel hydrogen batteries, nickel zinc batteries, and the like. The operating voltage of such unit secondary battery cells, i.e., unit secondary batteries, is about 2.5V to 4.5V. Therefore, when a higher output voltage is required, a battery pack is also configured by connecting multiple secondary batteries in series.

In addition, a battery pack is also configured by connecting multiple secondary batteries in parallel according to the charge and discharge capacity required for the battery pack. Therefore, the number and the electrical connection type of secondary batteries included in the battery pack can be set variously according to the required output voltage and/or the charge and discharge capacity.

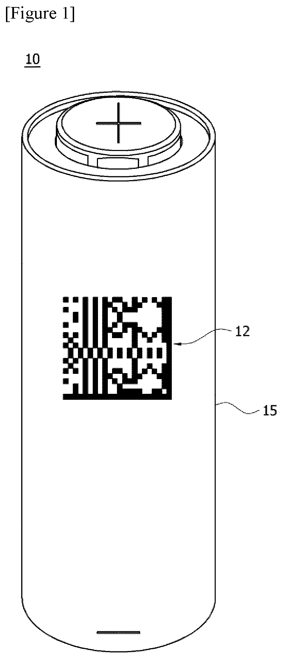

Cylindrical, rectangular, and pouch-type secondary batteries are provided as the types of unit secondary batteries. As shown in Figure 1, in the case of a cylindrical secondary battery (10), the cylindrical secondary battery (10) is manufactured by interposing a separator, which is an insulator, between positive and negative electrodes, winding them to form a jelly roll-shaped electrode assembly (not shown), and inserting it into a cylindrical battery can (15).

A recognition code (12) is printed on the outer surface of the cylindrical secondary battery (10). Here, the recognition code (12) is used for identifying and tracking the secondary battery during the manufacturing, distribution, use, and recycling processes of the secondary battery. That is, the recognition code (12) is used to indicate a production date, a manufacturer, a model name, a serial number, and the like of the secondary battery during the manufacturing process of the secondary battery. Using such a recognition code (12), a specific secondary battery can be identified and tracked among multiple secondary batteries. Therefore, it is preferable that the recognition code (12) is maintained without being erased during the manufacturing, distribution, use, and recycling processes of the secondary battery. The recognition code (12) may include a two-dimensional QR code or barcode, and the like, as in Figure 1.

The recognition code (12) may be printed immediately after the manufacturing and inspection of the cylindrical secondary battery (10) is completed.

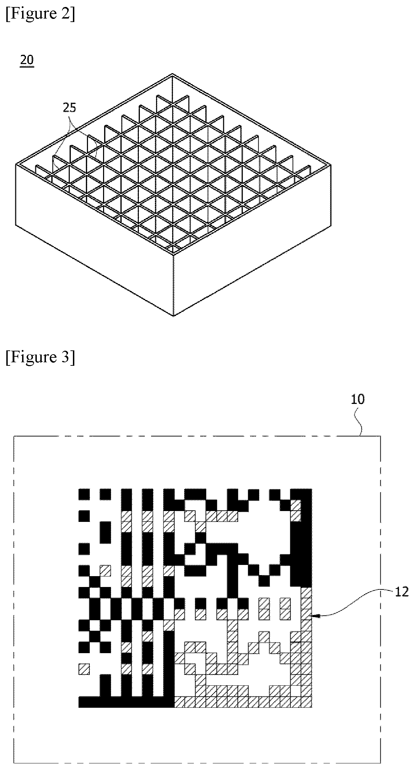

Figure 2 is a perspective diagram schematically showing an appearance of a secondary battery packaging box. Then, Figure 3 is a partially enlarged view schematically showing an enlarged appearance of a part of a cylindrical secondary battery (10).

The completely manufactured cylindrical secondary battery can be accommodated in a packaging box (20). Between a secondary battery manufacturing process and a battery pack manufacturing process, the cylindrical secondary battery can be transferred through the packaging box. The secondary battery manufacturing process and the battery pack manufacturing process can be performed with a time difference from each other, and can also be performed in different spaces. Of course, the subjects of the processes can also be different. Therefore, the packaging box can be used so that the secondary battery can be safely accommodated to be stored or moved.

As illustrated, interleaves (25) are provided inside the packaging box (20), and individual secondary batteries can be separated from each other and accommodated through the interleaves. That is, a plurality of interleaves is provided so that they intersect with each other, whereby the secondary batteries can be individually inserted and accommodated in the accommodation spaces formed by the interleaves.

In the secondary battery packaging box (20), the plurality of cylindrical secondary batteries (10) can frequently shake or move due to external impact during transport. Of course, the secondary batteries are prevented from directly contacting or colliding with each other by the interleaves, but contact and friction between the interleaf and the outer surface of the secondary battery inevitably occur. At this time, the recognition code (12) printed on the outer surface of the cylindrical secondary battery (10) and the secondary battery packaging interleaf (25) can be in contact with each other, and such friction can occur frequently.

Due to such friction, as shown in Figure 3, detachment, or damage of a portion of the recognition code has frequently occurred. That is, a portion of the recognition code is erased or only a trace remains, whereby there is a concern that it cannot perform its function as a normal recognition code. Therefore, there was a problem that it was difficult to track and manage the secondary battery later.

For example, Korean Laid-Open Patent Publication No. 2015-0146180 (hereinafter, referred to as "prior patent") discloses a secondary battery cell packaging method comprising a cell storage step of accommodating a plurality of secondary battery cells in accommodating grooves of a tray, and a secondary battery cell package.

The prior patent does not recognize the recognition code damage problem due to friction occurring during a process that the recognition code printed on the outer surface of the secondary battery and the inner surface of the accommodating groove where the cell of the tray is accommodated, contact with each other, and does not disclose a structure for preventing damage to the recognition code. Such a prior patent still cannot solve the problem of damage to the printed recognition code of the secondary battery occurring during delivery.

Therefore, it is necessary to find a method that can conveniently accommodate and safely transfer cylindrical secondary batteries through a packaging box, and particularly, prevent damage to the recognition code of the secondary battery occurring during transfer.

### Disclosure

### Technical Problem

The present invention is intended to solve a conventional problem of damage to a recognition code of a cylindrical battery cell accommodated during delivery.

Through one example of the present invention, it is intended to provide a secondary battery packaging interleaf and a packaging box, which can prevent damage to recognition codes of a plurality of stored cylindrical battery cells, thereby ensuring safeness and reliability of a secondary battery during manufacturing, distribution, use, and recycling processes of the secondary battery.

Through one example of the present invention, it is intended to provide a secondary battery packaging interleaf and a packaging box, which can be easily delivered without damage to a recognition code while the existing protective tape used to prevent damage to the recognition code is not further imparted to a cylindrical battery cell.

Through one example of the present invention, it is intended to provide a secondary battery packaging interleaf and a packaging box, which can prevent damage to a recognition code while accommodation performance of a cylindrical secondary battery is maintained through only simple modification of a shape or structure of the interleaf.

### Technical Solution

To achieve the above-described objects, according to one example of the present invention, it is possible to provide a secondary battery packaging box characterized by comprising: a box body having an outer shape forming an internal space; and a partition wall provided in the box body to divide the internal space into multiple accommodation spaces in which multiple cylindrical battery cells are each accommodated, wherein the partition wall is provided with a contact prevention portion provided to be in no contact with a recognition code printed on the outer peripheral surface of the cylindrical battery cell accommodated in the accommodation space.

A position and a height of the contact prevention portion may be set differently depending on the height at which the recognition code is positioned and the height of the recognition code in a state where the cylindrical battery cell is accommodated in the accommodation space. The height at which the recognition code is positioned in the cylindrical battery cell and the height of the recognition code itself may vary. Of course, the height of the cylindrical battery cell itself may also vary. Therefore, the position and height of the contact prevention portion may be flexibly changed.

The contact prevention portion may comprise a perforated portion formed in the partition wall, wherein the perforated portion may be formed at a height corresponding to the recognition code. The perforated portion may be formed in the form of a pass-through window penetrating in a rectangular shape.

The contact prevention portion may comprise a recessed portion formed in the partition wall. The recessed portion may be in a form recessed in a rectangular shape. As the partition wall in the recessed portion has a thickness smaller than the thickness of the partition wall in other portions, the recessed portion may be easily formed.

It is preferable that the partition wall is provided so that the outer surface of the cylindrical battery cell allows contact with the inner surface of the partition wall, and the outer surface of the cylindrical battery cell printed with the recognition code is in no contact with the inner surface of the partition wall through the contact prevention portion. That is, by forming steps in the partition wall, it is preferable that while allowing contact with the outer surface of the cylindrical battery cell, contact with some regions, i.e., a printing surface is limited.

The partition wall may be formed of a paper material. By forming the partition wall in the form of corrugated cardboard, it is possible to secure self-shock absorption and ease of manufacture.

The partition wall may comprise a plurality of horizontal partition walls; and a plurality of vertical partition walls that are cross-connected with the horizontal partition walls to form the plurality of accommodation spaces in a grid shape. The partition wall may be formed integrally with the box body, and may be inserted into the box body in a state of being separated from the body.

A plurality of upper grooves formed at a predetermined interval may be formed in the horizontal partition wall, and a plurality of lower grooves formed at a predetermined interval, and inserted and coupled into each of the plurality of upper grooves may be formed in the vertical partition wall.

The upper groove may be formed by being recessed downward from the upper end of the horizontal partition wall, and the lower groove may be formed by being recessed upward from the lower end of the vertical partition wall.

The length of the lower groove may be longer than the length of the upper groove.

The perforated portion of the horizontal partition wall may be formed between the upper groove and an adjacent upper groove, and the perforated portion of the vertical partition wall may be formed between the lower groove and an adjacent lower groove.

The upper portion of the upper groove may have a width wider than the width of the lower portion of the upper groove.

The horizontal partition wall and the vertical partition wall, which are cross-connected with each other, may comprise plane portions each forming one side of the accommodation space of the cylindrical battery cell; and a corner portion formed by the plane portion of the horizontal partition wall and the plane portion of the vertical partition wall.

The contact prevention portion may comprise a protective band provided on the partition wall, and the protective band may be provided such that in the outer peripheral surface of the cylindrical battery cell, other sides are contacted first than a printing surface on which the recognition code is printed.

The protective band may be provided to be extended in a horizontal direction at each of a portion higher and a portion lower than the height corresponding to the recognition code.

It may further comprise an outer protective sheet positioned to be in close contact with the inner surface of the sidewall of the box body and comprising a plurality of openings positioned at a height corresponding to the recognition code of each of the plurality of accommodated cylindrical battery cells.

It may further comprise an outer protective sheet positioned to be in close contact with the inner surface of the sidewall of the box body and on which a support band extended in a horizontal direction at a portion higher and a portion lower than the height corresponding to each recognition code of the plurality of accommodated cylindrical battery cells is formed.

The outer protective sheet may be a constitution to be added or attached to the inner surface of the box body. The outer protective sheet may also be made of corrugated cardboard.

The box body may comprise a plurality of preventive bands provided on a sidewall to be in no contact with the recognition code printed on the outer peripheral surface of the cylindrical battery cell accommodated in the accommodation space, wherein the preventive band may be formed to be extended in a horizontal direction at each of a portion higher and a portion lower than the height corresponding to the recognition code.

To achieve the above-described objects, according to one example of the present invention, it provides a secondary battery packaging interleaf comprising a partition wall forming multiple accommodation spaces, in which multiple cylindrical battery cells with printed recognition codes are each accommodated, and provided with a contact prevention portion to be in no contact with the recognition code printed on the outer peripheral surface of the accommodated cylindrical battery cell.

To achieve the above-described objects, according to one example of the present invention, in a secondary battery packaging interleaf which is inserted and mounted into a box body having an outer shape forming an internal space to form a plurality of accommodation spaces for accommodating a plurality of cylindrical battery cells, respectively, it is possible to provide a secondary battery packaging interleaf or partition wall, characterized by comprising: a plurality of horizontal partition walls; and a plurality of vertical partition walls which are provided across the horizontal partition walls to form the plurality of accommodation spaces in a grid shape, wherein contact prevention portions formed on the horizontal partition walls and the vertical partition walls are formed to be in no contact with a recognition code printed on the outer peripheral surface of the cylindrical battery cell in a state where the cylindrical battery cell is accommodated.

The interleaf or partition wall may be manufactured in a state of being separated from the body of the packaging box to be inserted and mounted inside the body.

The height of the contact prevention portion may be set differently depending on the height of the recognition code.

The contact prevention portion may comprise a perforated portion formed in the partition wall, wherein the perforated portion may be formed at a height corresponding to the recognition code.

The partition wall may comprise a plurality of horizontal partition walls; and a plurality of vertical partition walls which is cross-connected with the plurality of horizontal partition walls to form the plurality of receiving spaces in a grid shape.

The horizontal partition wall may be provided with a plurality of upper grooves formed at a predetermined interval, and the vertical partition walls may be provided with a plurality of lower grooves formed at a predetermined interval, and inserted and coupled to each of the plurality of upper grooves.

The secondary battery packaging interleaf characterized in that the position and height of the contact prevention portion are set differently depending on the height at which the recognition code is positioned in a state where the cylindrical battery cell is accommodated in the accommodation space and the height of the recognition code.

It is preferable that the position of the contact prevention portion is formed to correspond to the position of the recognition code, and the height of the contact prevention portion is greater than the height of the recognition code.

The contact prevention portion may comprise a perforated portion formed in the partition wall.

It is preferable that the contact prevention portion comprises a recessed portion formed in the partition wall, and the recessed portion is a portion formed so that a portion of the partition wall has a thickness thinner than that of another portion.

It is preferable that the height of the contact prevention portion is smaller than half the height of the entire partition wall. Therefore, it can prevent the rigidity of the partition wall from being reduced by the contact prevention portion. On the other hand, the width of the contact prevention portion may be greater than half the width of the partition wall in the accommodation portion where one cylindrical battery cell is accommodated. Even if the entire packaging box is tilted to one side, causing a crushing phenomenon of the partition wall, it is possible to prevent contact between the recognition code and the partition wall effectively.

### Advantageous Effects

The present invention is intended to solve a conventional problem of damage to a recognition code of a cylindrical battery cell accommodated during delivery.

Through one example of the present invention, it is possible to provide a secondary battery packaging interleaf and a packaging box, which can prevent damage to recognition codes of a plurality of stored cylindrical battery cells, thereby ensuring safeness and reliability of a secondary battery during manufacturing, distribution, use, and recycling processes of the secondary battery.

Through one example of the present invention, it is possible to provide a secondary battery packaging interleaf and a packaging box, which can be easily delivered without damage to a recognition code while the existing protective tape used to prevent damage to the recognition code is not further imparted to a cylindrical battery cell.

Through one example of the present invention, it is possible to provide a secondary battery packaging interleaf and a packaging box, which can prevent damage to a recognition code while accommodation performance of a cylindrical secondary battery is maintained through only simple modification of a shape or structure of the interleaf.

Through one example of the present invention, it is possible to provide a secondary battery packaging interleaf and a packaging box, which can effectively prevent damage to the recognition code by easily forming a perforated portion or a recessed portion in a partition wall or interleaf dividing the inside of the packaging box.

### Description of Drawings

Figure 1 is a perspective diagram schematically showing an appearance of a cylindrical battery cell of a conventional art.
Figure 2 is a perspective diagram schematically showing an appearance of a secondary battery packaging box of a conventional art.
Figure 3 is a partially enlarged view schematically showing an enlarged appearance of a part of a cylindrical battery cell of a conventional art.
Figure 4 is a perspective diagram schematically showing an appearance of a secondary battery packaging interleaf according to one example of the present invention.
Figure 5 is a front view schematically showing an appearance of a horizontal partition wall of a secondary battery packaging interleaf according to one example of the present invention.
Figure 6 is a side view schematically showing an appearance of a vertical partition wall of a secondary battery packaging interleaf according to one example of the present invention.
Figure 7 is a perspective diagram schematically showing an appearance of a secondary battery packaging box according to one example of the present invention.
Figure 8 is a partially enlarged view schematically showing an enlarged appearance of a part of a secondary battery packaging interleaf according to one example of the present invention and a cylindrical battery cell.
Figure 9 is a front view schematically showing an appearance of a horizontal partition wall of a secondary battery packaging interleaf according to another example of the present invention.
Figure 10 is a side view schematically showing an appearance of a vertical partition wall of a secondary battery packaging interleaf according to another example of the present invention.
Figure 11 is a front view schematically showing an appearance of an outer protective sheet of a secondary battery packaging box according to another example of the present invention.
Figure 12 is a front view schematically showing an appearance of an outer protective sheet of a secondary battery packaging box according to another example of the present invention.
Figure 13 is a front view schematically showing an inner surface appearance of a sidewall of a secondary battery packaging box according to another example of the present invention.

### Best Mode

Hereinafter, a pouch forming device according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

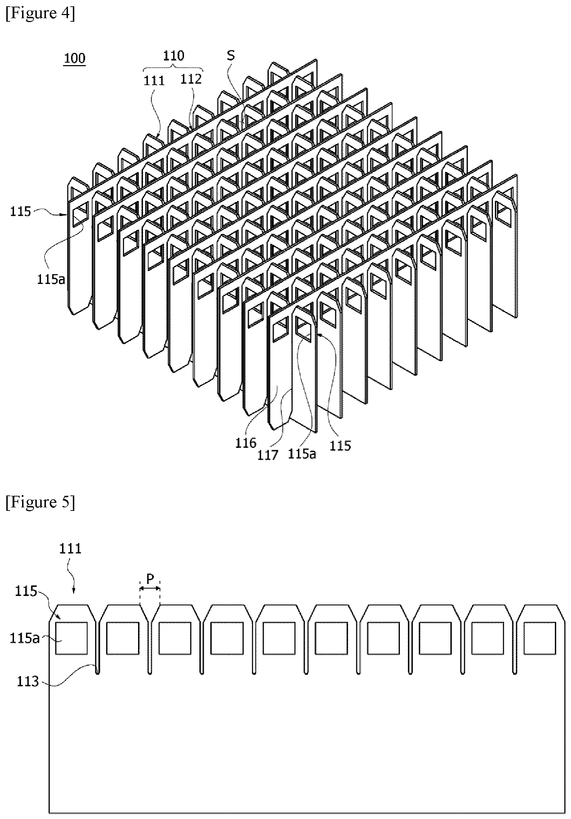

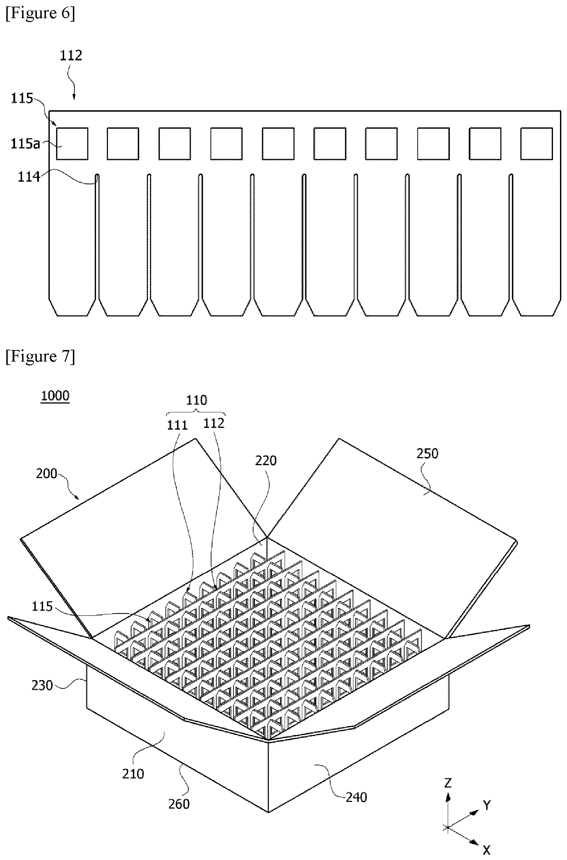

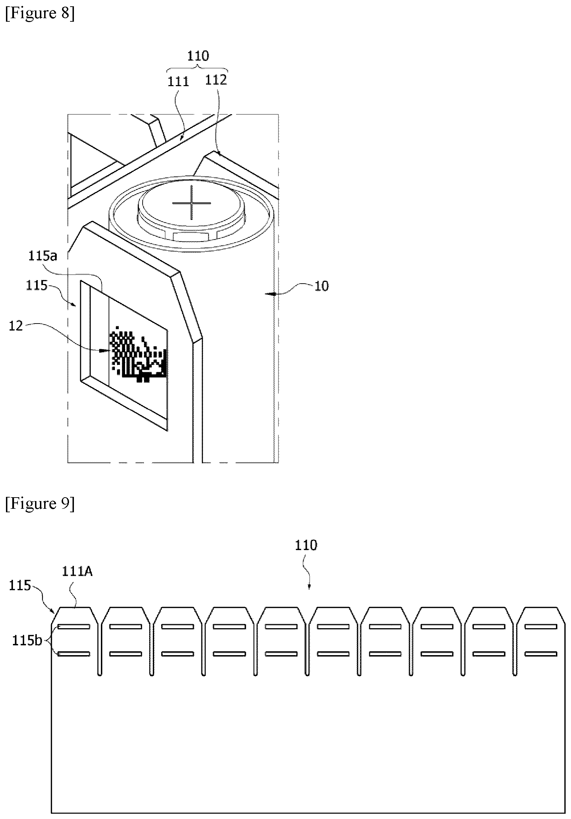

Figure 4 is a perspective diagram schematically showing an appearance of a secondary battery packaging interleaf (100) according to one example of the present invention. Figure 5 is a front view schematically showing an appearance of a horizontal partition wall (111) of a secondary battery packaging interleaf (100) according to one example of the present invention. Figure 6 is a side view schematically showing an appearance of a vertical partition wall (112) of a secondary battery packaging interleaf (100) according to one example of the present invention. Figure 7 is a perspective diagram schematically showing an appearance of a secondary battery packaging box (1000) according to one example of the present invention. Then, Figure 8 is a partially enlarged view schematically showing an enlarged appearance of a part of a secondary battery packaging interleaf (100) according to one example of the present invention and a cylindrical battery cell (10).

First, a secondary battery packaging box (1000) comprising a secondary battery packaging interleaf (100) will be described with reference to Figures 4 to 8.

Specifically, the secondary battery packaging box (1000) comprises a box body (200). The box body (200) may have an internal space capable of accommodating a plurality of cylindrical battery cells (10). It may have an outer shape forming such an internal space. For example, the secondary battery packaging box (1000) may have a cuboid outer shape. For example, the box body (200) may have a front sidewall (210), a rear sidewall (220), a left sidewall (230), a right sidewall (240), an upper wall (250), and a lower wall (260). The box body (200) may comprise, for example, a paper material. However, it is not necessarily limited to such a material, and the box body (200) may be made of an electrical insulation material. For example, the box body (200) may comprise an electrical insulation plastic material.

The secondary battery packaging box (1000) according to one example of the present invention may comprise a partition wall (110). For example, the secondary battery packaging box (1000) of the present invention may comprise a partition wall (110) in which a plurality of horizontal partition walls (111) and a plurality of vertical partition walls (112) are coupled to each other.

Specifically, the partition wall (110) may be provided to form a plurality of accommodation spaces (S) accommodating each of a plurality of cylindrical battery cells (10) on which a recognition code (12) is printed. For example, the plurality of accommodation spaces (S) may have a grid shape in a plane. That is, one accommodation space (S) may be a space of an approximate cuboid with a size capable of accommodating one cylindrical battery cell (10).

In addition, the partition wall (110) may be provided with a contact prevention portion (115). The contact prevention portion (115) may be a portion provided to be in no contact with the recognition code (12) printed on the outer peripheral surface of the accommodated cylindrical battery cell (10). For example, the contact prevention portion (115) may be located on the upper portion of the partition wall (110). However, the contact prevention portion (115) is not limited to such a positional feature, which may be set according to the position of the recognition code (12) of the cylindrical battery cell (10).

Here, the recognition code (12) is used for identifying and tracking the cylindrical battery cell (10) during the manufacturing, distribution, use, and recycling processes of the cylindrical battery cell (10). For example, the recognition code (12) may include information such as the production date, manufacturer, model name, and serial number of the cylindrical battery cell (10) during the manufacturing process of the cylindrical battery cell (10). For example, the recognition code (12) may be indicated in the format of a 2D marking, which is a two-dimensional barcode. Here, the 2D marking has an advantage capable of storing a larger amount of data than a 1D (one-dimensional) barcode. Alternatively, the recognition code (12) may be indicated in the format of a QR code.

Therefore, the secondary battery packaging box (1000) of the present invention comprises a partition wall (110) provided with a contact prevention portion (115) provided to be in no contact with the recognition code (12) printed on the outer peripheral surface of the accommodated cylindrical battery cell (10), whereby even if the secondary battery packaging box (1000), in which a plurality of cylindrical battery cells (10) is accommodated, is shaken or moved by an external impact during delivery, the recognition code (12) and the partition wall (110) may not come into contact, so that it is possible to effectively prevent damage to the recognition code (12).

Also, the size of the height of the contact prevention portion (115) may be set differently depending on the height of the recognition code (12). That is, the height (up-and-down width) of the contact prevention portion (115) at a position where the central portion of the contact prevention portion (115) faces the central portion of the recognition code (12) may be set according to the size of the height of the recognition code (12). For example, since the cylindrical battery cell (10) can move up and down due to an external impact during transport within the accommodation space (S), considering this, it may be preferable that the size of the up-and-down width of the contact prevention portion (115) is larger than the size of the up-and-down width of the recognition code (12).

In addition, the height of the position of the contact prevention portion (115) may be set according to the height of the recognition code (12) on the outer surface of the cylindrical battery cell (10). That is, the contact prevention portion (115) may be formed at a position corresponding to the recognition code (12) of the cylindrical battery cell (10), or a position slightly higher or slightly lower, or positions slightly higher and slightly lower than the corresponding position. For example, when the recognition code (12) of the cylindrical battery cell (10) is positioned higher than the middle of the up-and-down direction, the contact prevention portion (115) may be formed at the upper part based on the middle of the up-and-down direction of the partition wall (110).

Therefore, the secondary battery packaging box (1000) of the present invention can effectively prevent damage to the recognition code (12) by setting the height of the contact prevention portion (115) differently according to the height of the recognition code (12).

In addition, the contact prevention portion (115) may comprise a perforated portion (115a) formed in the partition wall (110). The perforated portion (115a) may be formed by a punching process of punching a part of the partition wall (110). In the punching process, a part of the partition wall (110) may be punched using a punch and a die to form the perforated portion (115a). At this time, the partition wall (110) may comprise a paper material. However, the material of the partition wall (110) is not necessarily limited to paper, which may include an electrical insulation material. For example, the electrical insulation material may be a plastic material. However, it will be preferable to manufacture the partition wall and the packaging box using a corrugated cardboard material that can exert manufacturing cost reduction and shock absorption characteristics, and the like.

For example, the perforated portion (115a) may have a size corresponding to the recognition code (12) of the cylindrical battery cell (10), or a size larger than the recognition code (12). The perforated portion (115a) may be formed at a height corresponding to the recognition code (12). For example, the perforated portion (115a) may have a shape such as a circle, quadrangle, or triangle. However, the shape of the perforated portion (115a) is not necessarily limited to these shapes, and any shape that can effectively avoid contact depending on the shape of the recognition code (12) may be applied.

Therefore, the secondary battery packaging box (1000) of the present invention can effectively block the recognition code (12) of the cylindrical battery cell (10) and the partition wall (110) from being in contact with each other by comprising a perforated portion (115a), which is formed by perforating a portion of the partition wall (110) and formed at a height corresponding to the recognition code (12), as the contact prevention portion (115).

For example, the partition wall (110) may comprise a plurality of horizontal partition walls (111) and a plurality of vertical partition walls (112). Specifically, the horizontal partition wall (111) may be provided to be assembled in a form that it extends long in a horizontal direction (X-axis direction) in the internal space of the box body (200) and stands up in a vertical direction (Z-axis direction). The vertical partition wall (112) may be provided to be assembled in a form that it extends long in a front-back direction (Y-axis direction) in the internal space of the box body (200) and stands up in a vertical direction (Z-axis direction). The plurality of vertical partition walls (112) may be coupled with the plurality of horizontal partition walls (111) in a form that they intersect in the front-back direction and the horizontal direction. That is, the plurality of vertical partition walls (112) may be assembled with the plurality of horizontal partition walls (111) to form a plurality of grid-shaped accommodation spaces (S).

For example, it is preferable that the planar surface of each accommodation space (S) has a quadrangle shape, especially a square shape. In this instance, it is preferable that the planar surface of the cylindrical battery cell (10) has a circular shape. Therefore, due to the structural characteristics of the accommodation space, the cylindrical battery cell (10) can rotate and move within the accommodation space. However, even if the cylindrical battery cell rotates by the square accommodation space and the shape of the cylindrical battery cell (10), the recognition code (12) has necessarily nothing to be in no contact with the partition wall (110) by the contact prevention portion (115).

Referring to Figures 5 and 6, the horizontal partition wall (111) may be provided with a plurality of upper grooves (113) formed at a predetermined interval. The vertical partition wall (112) may be provided with a plurality of lower grooves (114) formed at a predetermined interval. The plurality of lower grooves (114) is inserted into the plurality of upper grooves (113), respectively, whereby the horizontal partition wall (111) and the vertical partition wall (112) may be coupled to each other.

In addition, the upper groove (113) may be formed by being recessed downward from the upper end of the horizontal partition wall (111). The lower groove (114) may be formed by being recessed upward from the lower end of the vertical partition wall (112). The length of the lower groove (114) in the vertical direction may be longer than the length of the upper groove (113) in the vertical direction.

For example, the perforated portion (115a) of the horizontal partition wall (111) may be formed between one upper groove (113) and an adjacent upper groove (113). The perforated portion (115a) of the vertical partition wall (112) may be formed between one lower groove (114) and an adjacent lower groove (114).

Also, the upper portion of the upper groove (113) may have a width (P) wider than the width of the lower portion of the upper groove (113). That is, the upper groove (113) has an upper structure with a width (P) wider than the width of the lower portion, whereby a process of inserting the vertical partition wall (112) into the upper groove (113) of the horizontal partition wall (111) may be made easier. That is, it makes it easier by forming the upper width of the upper groove (113) widely for the lower groove (114) of the vertical partition wall (112) to be introduced into the upper portion of the upper groove (113). The vertical partition wall (112) thus introduced moves downward along the upper groove (113) of the horizontal partition wall (111). Accordingly, the secondary battery packaging box (1000) of the present invention has the advantage capable of easily and quickly assembling the horizontal partition walls (111) and the vertical partition walls (112).

In addition, the horizontal partition wall (111) and the vertical partition wall (112) cross-connected with each other comprise plane portions (116). The plane portion (116) may be provided to form one side of the accommodation space (S) of the cylindrical battery cell (10). A corner portion (117) may be a constitution formed by meeting the plane portion (116) of the horizontal partition wall (111) and the plane portion (116) of the vertical partition wall (112) with each other.

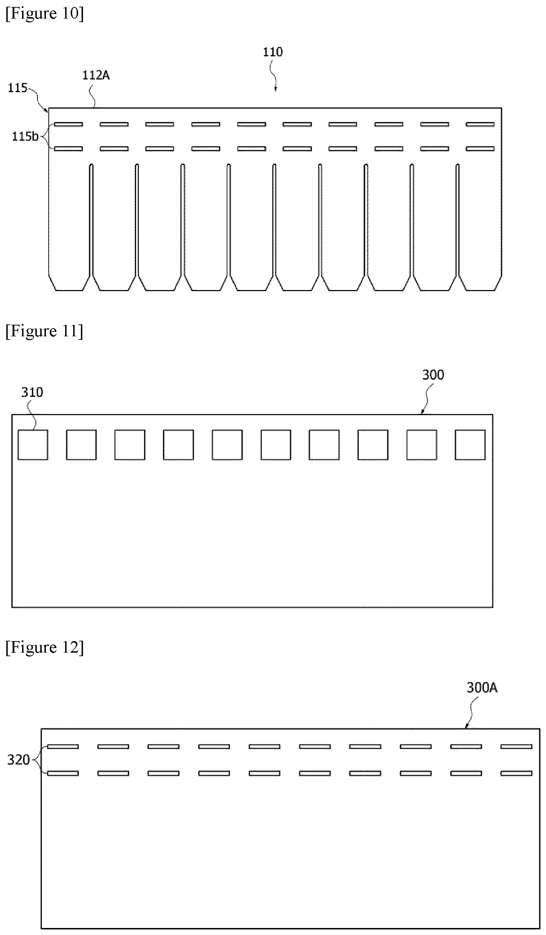

Figure 9 is a front view schematically showing an appearance of a horizontal partition wall (111A) of a secondary battery packaging interleaf according to another example of the present invention. Then, Figure 10 is a side view schematically showing an appearance of a vertical partition wall (112A) of a secondary battery packaging interleaf according to another example of the present invention.

In Figure 9 and Figure 10 together with Figure 1, the secondary battery packaging box according to another example of the present invention does not have any perforated portion (115a) formed therein, unlike the secondary battery packaging box (1000) of Figure 5 and Figure 6, which may instead comprise a protective band (115b). However, the remaining constitutions of the secondary battery packaging box may be similar or identical to those of the secondary battery packaging box (1000) of Figure 5 and Figure 6.

For example, the partition wall (110) of the secondary battery packaging interleaf according to another example of the present invention may comprise a horizontal partition wall (111A) and a vertical partition wall (112A). For example, the secondary battery packaging interleaf may be manufactured by coupling the horizontal partition wall (111A) and the vertical partition wall (112A) with each other.

Specifically, the contact prevention portion (115) may comprise a protective band (115b) provided on the partition wall (110). For example, as in Figures 9 and 10, the protective band (115b) may be formed on each of the horizontal partition wall (111A) and the vertical partition wall (112A). For example, the protective band (115b) may be a band extended in the horizontal direction along the surface of each of the horizontal partition wall (111A) and the vertical partition wall (112A). The protective band (115b) may have a predetermined thickness in the vertical direction. The length of the protective band (115b) in the horizontal direction may correspond to the length of the recognition code (12) of the cylindrical battery cell (10) in the horizontal direction, or may be longer than that.

Also, the protective band (115b) may be provided so that in the outer peripheral surface of the cylindrical battery cell (10), other sides are contacted first than a printing surface on which the recognition code (12) is printed. That is, the protective band (115b) supports the outer surface of the cylindrical battery cell (10) on which the recognition code (12) is not printed, which may prevent the recognition code (12) from being in contact with the outer surface of the outer protective sheet (300). That is, the protective band (115b) supports the outer surface of the cylindrical battery cell (10), which may allow the recognition code (12) and the partition wall (110) to maintain a state being spaced apart from each other. Therefore, the protective band (115b) may maintain the separation distance between the cylindrical battery cell (10) and the partition wall (110) by the protective band (115b) before the recognition code (12) of the cylindrical battery cell (10) is in contact with the partition wall (110).

In addition, the protective band (115b) may be formed on each of a portion higher and a portion lower than the height corresponding to the recognition code (12). For example, as in Figure 9, ten protective bands (115b) may be formed at a position higher than the height corresponding to the recognition code (12), and the remaining ten protective bands (115b) may be formed at a position lower than the height corresponding to the recognition code (12). That is, the protective band (115b) may be formed at a height that may not be in contact with the recognition code (12) of the cylindrical battery cell (10) accommodated in the accommodation space (S). The protective band (115b) may have a shape extended in the horizontal direction. At this time, the protective band (115b) may have a shape protruding in a predetermined thickness from the surface of the partition wall (110) toward the cylindrical battery cell (10).

Therefore, the secondary battery packaging box (1000) according to one example of the present invention can maintain an appropriate separation distance between the cylindrical battery cell (10) and the partition wall (110) as the contact prevention portion (115) comprises the protective band (115b), thereby effectively preventing the recognition code (12) of the cylindrical battery cell (10) from contacting the partition wall (110).

Figure 11 is a front view schematically showing an appearance of an outer protective sheet (300) of a secondary battery packaging box according to another example of the present invention.

Referring to Figure 11 together with Figures 7 and 8, the secondary battery packaging box according to another example of the present invention may further comprise an outer protective sheet (300). The outer protective sheet (300) may be positioned to be in close contact with the inner surface of the sidewall of the box body (200). For example, four outer protective sheets (300) may be provided to be in close contact with the inner surfaces of the left sidewall (230), the right sidewall (240), the front sidewall (210), and the rear sidewall (220) of the box body (200), respectively.

In addition, the outer protective sheet (300) may comprise a plurality of openings (310). The plurality of openings (310) may be positioned at a height corresponding to the recognition code (12) of each of the plurality of accommodated cylindrical battery cells (10). For example, in the plurality of openings (310) of the outer protective sheet (300), when the recognition code (12) of each of the plurality of cylindrical battery cells (10) positioned to face the left sidewall (230), right sidewall (240), front sidewall (210), and rear sidewall (220) of the box body (200) is formed at a position higher than the middle of the cylindrical battery cells (10) in the vertical direction, the plurality of openings (310) may be formed at a position higher than the middle of the sidewalls of the box body (200) in the vertical direction.

Therefore, the secondary battery packaging box (1000) of the present invention further comprises an outer protective sheet (300) having a plurality of openings (310) formed therein, and by comprising an outer protective sheet (300) in which openings (310) formed on the partition wall (110) and formed at a height corresponding to the recognition code (12) are formed, it is possible to effectively blocking the recognition codes (12) formed on the plurality of cylindrical battery cells (10) from contacting the inner surfaces of the sidewalls of the secondary battery packaging box (1000).

Figure 12 is a front view schematically showing an appearance of an outer protective sheet (300A) of a secondary battery packaging box according to another example of the present invention.

Referring to Figure 12 together with Figures 7 and 8, the secondary battery packaging box according to another example of the present invention may have a plurality of support bands (320) formed on the outer protective sheet (300A) instead of a plurality of openings (310), unlike the outer protective sheet (300) of Figure 11. Specifically, the outer protective sheet (300A) may be positioned to be in close contact with the inner surface of the sidewall of the box body (200).

In the outer protective sheet (300A), the support bands (320) may be formed at a portion higher and a portion lower than the height corresponding to each of the recognition codes (12) of the plurality of accommodated cylindrical battery cells (10). That is, the support bands (320) may be formed at a height that may not be in contact with the recognition codes (12) of the cylindrical battery cells (10) accommodated in the accommodation space (S).

The support band (320) may have a shape extended in the horizontal direction along the outer surface of the outer protective sheet (300A). The support band (320) may have a predetermined thickness so that the recognition code (12) of the cylindrical battery cell (10) is in no contact with the outer surface of the outer protective sheet (300A). That is, the support band (320) supports the outer surface of the cylindrical battery cell (10) on which the recognition code (12) is not printed, which may prevent the recognition code (12) from being in contact with the outer surface of the outer protective sheet (300A). For example, as in Figure 12, two support bands (320) may be formed on the upper portion of the outer protective sheet (300A) facing the cylindrical battery cell (10). The two support bands (320) may be formed at higher and lower locations than the recognition code (12).

Therefore, the secondary battery packaging box (1000) of the present invention further comprises an outer protective sheet (300A) in which the support band (320) is formed, whereby it can effectively block the recognition code (12) formed on the plurality of cylindrical battery cells (10) from contacting the inner surface of the sidewall of the secondary battery packaging box (1000).

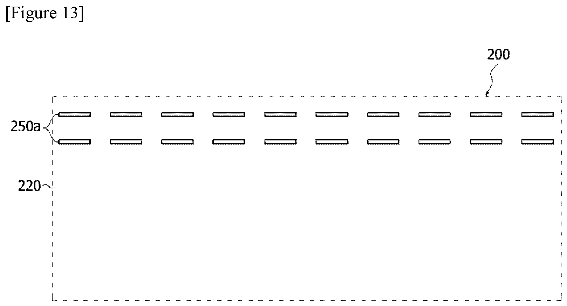

Figure 13 is a front view schematically showing an inner surface appearance of a sidewall of a secondary battery packaging box according to another example of the present invention.

Referring to Figure 13 together with Figures 7 and 8, the secondary battery packaging box according to another example of the present invention may have a plurality of preventive bands (250a) formed on the inner surface of the sidewall, unlike the secondary battery packaging box (1000) of Figure 7. For example, as in Figure 13, the plurality of preventive bands (250a) may be formed in the horizontal direction parallel on the inner surface of the rear sidewall (220). Furthermore, the plurality of preventive bands (250a) may be formed on each of the front sidewall (210), the left sidewall (230), and the right sidewall (240) of the box body (200).

Specifically, the plurality of preventive bands (250a) may be provided to be in no contact with the recognition code (12) printed on the outer peripheral surface of the cylindrical battery cell (10) accommodated in the accommodation space (S). That is, the preventive bands (250a) support the outer surface of the cylindrical battery cell (10) on which the recognition code (12) is not printed, which may prevent the recognition code (12) from being in contact with the inner surface of the sidewall of the box body (200). For example, the preventive bands (250a) may be formed on each of the left sidewall (230), the right sidewall (240), the front sidewall (210), and the rear sidewall (220) of the box body (200).

The preventive band (250a) may be formed to be extended in a horizontal direction at each of a portion higher and a portion lower than the height corresponding to the recognition code (12). That is, the preventive band (250a) may be formed at a height that may not be in contact with the recognition code (12) of the cylindrical battery cell (10) accommodated in the accommodation space (S).

Meanwhile, referring again to Figures 4 to 8, the present application may provide a secondary battery packaging interleaf (100) according to one example of the present invention.

Also, the secondary battery packaging interleaf (100) of the present invention may comprise a partition wall (110). Here, the partition wall (110) may have a constitution like or identical to the partition wall (110) described above in the secondary battery packaging box (1000). Specifically, the partition wall (110) may be provided in the internal space of the box body (200). When the partition wall (110) is coupled to the internal space of the box body (200), it may be provided to divide the internal space into a plurality of accommodation spaces (S) in which each of a plurality of cylindrical battery cells (10) is accommodated. For example, the plurality of accommodation spaces (S) may have a grid shape in a plane.

In addition, the partition wall (110) may comprise a contact prevention portion (115). Specifically, the contact prevention portion (115) may be a part of the partition wall (110) provided to be in no contact with the recognition code (12) printed on the outer peripheral surface of the cylindrical battery cell (10) accommodated in the accommodation space (S). For example, the contact prevention portion (115) may be located on the upper portion of the partition wall (110). However, the contact prevention portion (115) is not limited to such a positional feature, which may be set according to the position of the recognition code (12) of the cylindrical battery cell (10).

Therefore, the secondary battery packaging box (1000) of the present invention includes a partition wall (110) provided with a contact prevention portion (115) provided to be in no contact with the recognition code (12) printed on the outer peripheral surface of the accommodated cylindrical battery cell (10), whereby even if the plurality of cylindrical battery cells (10) accommodated in the secondary battery packaging box (1000) is shaken or moved by an external impact during delivery, the recognition code (12) and the partition wall (110) may not come into contact, so that it is possible to effectively prevent damage to the recognition code (12).

Also, the height of the contact prevention portion (115) may be set differently depending on the height of the recognition code (12). More specific descriptions of the contact prevention portion (115) are replaced with the contents described above in the secondary battery packaging box (1000).

In addition, the contact prevention portion (115) may comprise a perforated portion (115a) formed in the partition wall (110), wherein the perforated portion (115a) may be formed at a height corresponding to the recognition code (12). More specific descriptions of the perforated portion (115a) are replaced with the contents described above in the secondary battery packaging box (1000).

Furthermore, the partition wall (110) may comprise a plurality of horizontal partition walls (111), and a plurality of vertical partition walls (112) that are cross-connected with the horizontal partition walls (111) to form the plurality of accommodation spaces (S) in a grid shape. More specific descriptions of the horizontal partition walls (111) and the vertical partition walls (112) are replaced with the contents described above in the secondary battery packaging box (1000).

Also, a plurality of upper grooves (113) formed at a predetermined interval may be formed in the horizontal partition wall (111).

In addition, a plurality of lower grooves (114) formed at a predetermined interval, and inserted and coupled into each of the plurality of upper grooves (113) may be formed in the vertical partition wall (112).

Furthermore, the upper groove (113) may be formed by being recessed downward from the upper end of the horizontal partition wall (111).

Also, the lower groove (114) may be formed by being recessed upward from the lower end of the vertical partition wall (112).

In addition, the length of the lower groove (114) may be longer than the length of the upper groove (113).

More specific descriptions of the upper groove (113) and the lower groove (114) are replaced with the contents described above in the secondary battery packaging box (1000).

Also, the perforated portion (115a) of the horizontal partition wall (111) may be formed between the upper groove (113) and an adjacent upper groove (113).

In addition, the perforated portion (115a) of the vertical partition wall (112) may be formed between the lower groove (114) and an adjacent lower groove (114). More specific descriptions of the perforated portion (115a) of the horizontal partition wall (111) or the vertical partition wall (112) are replaced with the contents described above in the secondary battery packaging box (1000).

Furthermore, the upper portion of the upper groove (113) may have a width (P) wider than the width of the lower portion of the upper groove (113). More specific descriptions of the upper groove (113) are replaced with the contents described above in the secondary battery packaging box (1000).

Also, the horizontal partition wall (111) and the vertical partition wall (112), which are cross-connected with each other, comprise plane portions (116) each forming one side of the accommodation space (S) of the cylindrical battery cell (10), and a corner portion (117) formed by the plane portion (116) of the horizontal partition wall (111) and the plane portion (116) of the vertical partition wall (112).

In addition, the contact prevention portion (115) may comprise a protective band (115b) provided on the partition wall (110). The protective band (115b) may be provided such that in the outer peripheral surface of the cylindrical battery cell (10), other sides are contacted first than a printing surface on which the recognition code (12) is printed.

Furthermore, the protective band (115b) may be provided to be extended in a horizontal direction at each of a portion higher and a portion lower than the height corresponding to the recognition code (12). More specific descriptions of the protective band (115b) are replaced with the contents described above in the protective band (115b) of the secondary battery packaging box (1000).

Hereinafter, to specifically explain the present invention, the present invention will be described in more detail by way of examples, but it is not limited by the examples of the present invention. The examples according to the present invention can be modified in various other forms, and the scope of the present invention should not be construed as being limited to the examples described below. The examples of the present invention are provided to more completely explain the present invention to those having average knowledge in the industry.

As one example, the above-described perforated portion may be replaced with a recessed portion. The perforated portion can prevent contact between the recognition code and the partition wall by forming a pass-through window in a part of the partition wall. If the thickness of the partition wall is sufficient, it is possible to prevent the contact between the recognition code and the partition wall through the recessed portion. As one example, the thickness of the partition wall in the recessed portion may be made smaller than the thickness of the partition wall in other portions.

There is a concern that the accommodated cylindrical battery cell rotates or moves up and down. Of course, the up-and-down movement may be very limited. Therefore, it is preferable that the height of the perforated portion or recessed portion is larger than the height of the recognition code. In addition, it is preferable that the width of the perforated portion or recessed portion is formed to be smaller than the width of the partition wall in a single accommodation space, and preferably, it is more than half the width of the partition wall. This is because a part of the partition wall may be crushed in a state where the entire box is tilted to one side. Even in this situation, it is possible to effectively prevent the contact between the recognition code and the perforated portion or recessed portion.

### <Example>

The secondary battery packaging box according to Example of the present invention comprises the same components as those of the secondary battery packaging box (1000) shown in Figures 4 to 7. Particularly, the secondary battery packaging box (1000) of Example comprises a box body (200), and horizontal partition walls (111) and vertical partition walls

(112), which divide the internal space of the box body (200) into 100 accommodation spaces. In this instance, the horizontal partition wall (111) and the vertical partition wall (112) have perforated portions (115a) formed at a height corresponding to the recognition code (12) of the cylindrical battery cell (10) as contact prevention portions. Then, after 100 cylindrical battery cells (10) were accommodated in the secondary battery packaging box of Example, the box body was sealed. In this manner, two secondary battery packaging boxes were prepared.

### <Comparative Example>

In the secondary battery packaging box according to Comparative Example of the present invention, other components are configured in the same manner, except that no perforated portions are formed in the horizontal partition wall and the vertical partition wall, as compared with the secondary battery packaging box of Example.

### <Test Example>

To determine performance of each of Example and Comparative Example, damage prevention characteristics of the recognition code during movement of the secondary battery packaging box were evaluated. A test method was performed according to the vibration test standard corresponding to T3 (vibration test) of UN38.3. That is, the vibration test conditions were as follows: a vibration test was conducted for 15 minutes, where it was conducted in a sine sweep manner, and for 15 minutes, the vibration frequency started at 7 Hz and increased to 120 Hz, and then decreased to 7 Hz again. After the test completion, the recognition codes of 200 cylindrical battery cells were visually checked for damage, and the numbers of damaged cylindrical battery cells and undamaged cylindrical battery cells were shown in Table 1 below.

**[Table 1]**

| | Total number of cylindrical battery cells (units) | Number of damaged recognition codes for each accommodation position | |
|---|---|---|---|
| | | Outer portion (units) | Inner portion (units) |
| Example (2 boxes) | 200 | 19 | 0 |
| Comparative Example (2 boxes) | 200 | 18 | 8 |

As a result of the test, in the cylindrical battery cells accommodated in the secondary battery packaging boxes of Example, the recognition codes of 19 cylindrical battery cells among the cylindrical battery cells in the outer portions facing the sidewalls of the box bodies after the vibration test were damaged, and none of the cylindrical battery cells located on the inner sides of the box bodies had damaged recognition codes. That is, because the contact between the recognition codes and the partition walls did not occur for the cylindrical battery cells located on the inside, the secondary battery packaging boxes of Example, in which perforated portions were formed in the horizontal partition walls and the vertical partition walls, could prevent the recognition codes from being damaged, but the cylindrical battery cells located on the outer portion could not prevent to be in contact with the sidewalls of the box bodies, so that the cylindrical battery cells with damaged recognition codes were generated.

In the case of Comparative Example, among the cylindrical battery cells located in the outer portion like Example, 18 cylindrical battery cells had damaged recognition codes. On the other hand, since the perforated portions were not formed in the secondary battery packaging boxes of Comparative Example, it was identified that 8 recognition codes were damaged among the cylindrical battery cells located toward the inner portions of the box bodies.

Therefore, it can be known that damage to the recognition code can be prevented very effectively through the partition wall or the interleaf in which the contact prevention portion is formed. In addition, it can be known that damage to the recognition code in the cylindrical battery cell accommodated in the outermost portion can also be prevented by using the outer protective sheet having the contact prevention portion in a similar manner or by providing the protective band on the internal surface of the box body.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the Detailed Description of Invention.

## Claims

1. A secondary battery packaging box **characterized by** comprising:
a box body having an outer shape forming an internal space; and
a partition wall provided in the box body to divide the internal space into multiple accommodation spaces in which multiple cylindrical battery cells are each accommodated, wherein
the partition wall is provided with a contact prevention portion provided to be in no contact with a recognition code printed on the outer peripheral surface of the cylindrical battery cell accommodated in the accommodation space.

2. The secondary battery packaging box according to claim 1,
**characterized in that** a position and a height of the contact prevention portion are set differently depending on the height at which the recognition code is positioned and the height of the recognition code in a state where the cylindrical battery cell is accommodated in the accommodation space.

3. The secondary battery packaging box according to claim 1,
**characterized in that** the partition wall is provided so that the outer surface of the cylindrical battery cell allows contact with the inner surface of the partition wall, and the outer surface of the cylindrical battery cell printed with the recognition code is in no contact with the inner surface of the partition wall through the contact prevention portion.

4. The secondary battery packaging box according to claim 1,
**characterized in that** the contact prevention portion comprises a perforated portion or a recessed portion formed in the partition wall, wherein the perforated portion or the recessed portion is formed at a height corresponding to the recognition code.

5. The secondary battery packaging box according to claim 4,
**characterized in that** the perforated portion comprises a pass-through window in which a portion of the partition wall is removed, and the recessed portion is formed such that a portion of the partition wall has a thickness thinner than those of other portions.

6. The secondary battery packaging box according to claim 5,
**characterized in that** the partition wall is formed of a paper material.

7. The secondary battery packaging box according to claim 4,
**characterized in that** the partition wall comprises:
a plurality of horizontal partition walls; and
a plurality of vertical partition walls that are cross-connected with the horizontal partition walls to form the plurality of square accommodation spaces in a grid shape.

8. The secondary battery packaging box according to claim 7,
**characterized in that** a plurality of upper grooves formed at a predetermined interval is formed in the horizontal partition wall, and
a plurality of lower grooves formed at a predetermined interval, and inserted and coupled into each of the plurality of upper grooves is formed in the vertical partition wall.

9. The secondary battery packaging box according to claim 8,
**characterized in that** the upper groove is formed by being recessed downward from the upper end of the horizontal partition wall, and the lower groove is formed by being recessed upward from the lower end of the vertical partition wall.

10. The secondary battery packaging box according to claim 9,
**characterized in that** the perforated portion or the recessed portion of the horizontal partition wall is formed between the upper groove and an adjacent upper groove, and
the perforated portion or the recessed portion of the vertical partition wall is formed between the lower groove and an adjacent lower groove.

11. The secondary battery packaging box according to claim 1,
**characterized in that** the contact prevention portion comprises a protective band provided on the partition wall, and
the protective band is provided such that in the outer peripheral surface of the cylindrical battery cell, other sides are contacted first than a printing surface on which the recognition code is printed, whereby it is provide to prevent the printing surface on which the recognition code is printed from being in contact with the partition wall.

12. The secondary battery packaging box according to claim 11,
**characterized in that** the protective band is provided to be extended in a horizontal direction at each of a portion higher and a portion lower than the height corresponding to the recognition code.

13. The secondary battery packaging box according to claim 1,
**characterized by** further comprising an outer protective sheet positioned to be in close contact with the inner surface of the sidewall of the box body and comprising a plurality of opening portions or recessed portions positioned at a height corresponding to the recognition code of each of the plurality of accommodated cylindrical battery cells.

14. The secondary battery packaging box according to claim 1,
**characterized by** further comprising an outer protective sheet positioned to be in close contact with the inner surface of the sidewall of the box body and on which a support band extended in a horizontal direction at a portion higher and a portion lower than the height corresponding to each recognition code of the plurality of accommodated cylindrical battery cells is formed.

15. The secondary battery packaging box according to claim 1,
**characterized in that** the box body comprises:
a plurality of preventive bands provided on a sidewall to be in no contact with the recognition code printed on the outer peripheral surface of the cylindrical battery cell accommodated in the accommodation space, wherein
the preventive band is formed to be extended in a horizontal direction at each of a portion higher and a portion lower than the height corresponding to the recognition code.

16. A secondary battery packaging interleaf, which is inserted and mounted into a box body having an outer shape forming an internal space to form a plurality of accommodation spaces for accommodating a plurality of cylindrical battery cells, respectively,
the secondary battery packaging interleaf **characterized by** comprising:
a plurality of horizontal partition walls; and
a plurality of vertical partition walls which are provided across the horizontal partition walls to form the plurality of accommodation spaces in a grid shape, wherein
contact prevention portions formed on the horizontal partition walls and the vertical partition walls are formed to be in no contact with a recognition code printed on the outer peripheral surface of the cylindrical battery cell in a state where the cylindrical battery cell is accommodated.

17. The secondary battery packaging interleaf according to claim 16,
**characterized in that** the position and height of the contact prevention portion are set differently depending on the height at which the recognition code is positioned in a state where the cylindrical battery cell is accommodated in the accommodation space and the height of the recognition code.

18. The secondary battery packaging interleaf according to claim 17,
**characterized in that** the position of the contact prevention portion is formed to correspond to the position of the recognition code, and the height of the contact prevention portion is greater than the height of the recognition code.

19. The secondary battery packaging interleaf according to claim 16,
**characterized in that** the contact prevention portion comprises a perforated portion formed in the partition wall.

20. The secondary battery packaging interleaf according to claim 16,
**characterized in that** the contact prevention portion comprises a recessed portion formed in the partition wall, and the recessed portion is a portion formed so that a portion of the partition wall has a thickness thinner than that of another portion.
